# FASCICULE DE BREVET EUROPEEN

(11) **EP 1 873 030 B1**
(45) Date de publication et mention de la délivrance du brevet: **06.01.2016**
(21) Numéro de dépôt: 07110177.8
(22) Date de dépôt: 13.06.2007
(51) Int. Cl.: B60T 8/40, B60T 13/14, B60T 17/04, F15B 1/02, F16L 55/04

(54) **Circuit de hydraulique de freinage**
Hydraulischer Bremskreis
Hydraulic braking circuit

(30) Priorité: 30.06.2006 FR 0606043
(43) Date de publication de la demande: 02.01.2008
(73) Titulaire: ROBERT BOSCH GMBH, 70442 Stuttgart (DE)
(72) Inventeur: Fourcade, Jean, 77420 Champs Sur Marine (FR); Anderson, Chris, 75002 Paris (FR); Richard, Philippe, 77500 Chelles (FR)

(56) Documents cités:
- WO-A-97/14591
- WO-A-2006/066993
- US-A- 3 473 565
- US-A- 6 089 273

## Description

La présente invention a pour objet un circuit hydraulique de freinage muni d'un dispositif amélioré d'alimentation de liquide hydraulique. Un tel circuit est utilisé pour éviter à un véhicule de fort gabarit, et notamment avec un centre de gravité haut placé pouvant engendrer un couple de basculement tels les 4x4 tous terrains, de se renverser lors d'un coup de volant important dans une courbe ou bien lors d'un puissant freinage en courbe. L'invention a ainsi pour but ultime de perfectionner le fonctionnement des systèmes de correction de la trajectoire d'un véhicule couplé à un système de freinage amélioré tel l'antiblocage des roues.

Lorsqu'un conducteur appuie sur une pédale de frein d'un véhicule, le véhicule est freiné par l'intermédiaire d'un circuit hydraulique de freinage. Dans certains cas, le déplacement d'un piston d'un maître cylindre qui comprime le volume du liquide hydraulique présent dans au moins une chambre du maître cylindre est assisté par un dispositif pneumatique. La pression qui en résulte est alors amplifiée. Cette pression permet de déclencher le dispositif de freinage sur au moins une roue du véhicule.

Lors d'un dérapage ou lors d'un freinage brusque du véhicule par le conducteur, il peut se mettre en place, en plus du dispositif de freinage pneumatique habituel évoqué ci-dessus, un dispositif de correction de la trajectoire du véhicule. Ce dispositif de correction de la trajectoire peut être du type ESP, pour Electronic System Program ou Programme à Système Electronique. Ce dispositif de correction de trajectoire possède des capteurs électroniques qui détectent le comportement dynamique anormal du véhicule. Ce dispositif apporte alors une correction de trajectoire par le freinage ou le défreinage complémentaire d'au moins une roue du véhicule sans que le conducteur ne le décide.

Le problème est que les véhicules imposants et notamment haut sur la route ont tendance lorsque le freinage est trop efficace et surtout dans une courbe à basculer.

Afin d'éviter un appui trop important de la roue la plus sollicitée, c'est à dire celle située le plus souvent en appui sur l'avant et à l'extérieur du virage, l'invention laisse glisser cette roue.

A ces fins, on va gaver rapidement et un peu plus longtemps le frein correspondant à la roue que l'on souhaite laisser glisser sur le sol. Ainsi on évite le renversement du véhicule. Ce gavage doit pouvoir se réaliser grâce à un moyen simple, peu coûteux et facile à monter sur un véhicule. De plus, il est envisagé d'en équiper les véhicules déjà en service et qui en sont dépourvus. Le dispositif de correction de la trajectoire fonctionne grâce à une pompe hydraulique. Cette pompe génère une pression permettant de freiner plus fort au moins une roue. Pour générer cette pression, la pompe hydraulique doit aspirer du liquide de frein provenant normalement du réservoir de liquide de frein.

La pompe étant située en aval du maître cylindre, le liquide de frein doit circuler à travers le maître cylindre pour parvenir jusqu'à la pompe. Or le maître cylindre a une structure telle qu'il comporte des conduits et des rétrécissements de section ralentissant sensiblement la vitesse d'écoulement du liquide hydraulique à travers lui. La vitesse d'écoulement du liquide hydraulique à travers le maître cylindre est également ralentie du fait des pertes de charges du liquide hydraulique liées aux frottements et au caractère physico-chimique de ce liquide hydraulique. La durée d'écoulement du liquide hydraulique contribue ainsi à définir un temps de réaction du véhicule au freinage. Ce temps de réaction est d'autant plus long que le trajet à parcourir pour le liquide est long et sinueux.

Afin de réduire ce temps de réaction du véhicule au freinage, l'écoulement du liquide dans les conduits du circuit hydraulique de freinage doit être facilité. Pour cela, il pourrait être possible d'élargir les sections de passage à l'intérieur du maître cylindre. Cependant, cette possibilité est limitée par les contraintes liées aux restrictions d'encombrement des éléments présents à l'intérieur du véhicule qui ne permettent pas d'élargir à souhait le maître cylindre. De plus, pour que le dispositif de correction de la trajectoire soit économiquement rentable, il faut modifier le moins possible la structure du maître cylindre et la structure du dispositif de correction de la trajectoire du véhicule. En outre, une telle solution n'est pas envisageable sur les véhicules déjà produits.

Or le problème est que l'on ne sait pas fournir le volume nécessaire de liquide de frein avec une pression suffisante afin de garantir un niveau d'aspiration suffisant à l'entrée de la pompe hydraulique nécessaire afin de raccourcir le temps de réponse.

Pour raccourcir le temps de réaction du système de correction de la trajectoire et réduire les pertes de charges, tout en évitant des modifications d'optimisation d'écoulement à l'intérieur du maître cylindre, l'invention prévoit alors un circuit hydraulique muni d'un moyens pour injecter un volume supplémentaire, typiquement une ou plusieurs vessie de gavage situées entre le maître-cylindre et la pompe hydraulique.

Un volume supplémentaire pour améliorer un circuit de frein est connu du document WO/9714591.

Le circuit hydraulique de freinage comporte ainsi un maître cylindre et au moins un piston qui déplace le liquide hydraulique dans le circuit hydraulique de freinage. Ce liquide hydraulique entraîne un mécanisme de freinage. Ce mécanisme de freinage comprend généralement au moins un patin ou des plaquettes de frein en appui sur au moins un moyeu ou au moins un disque d'une roue. Lorsqu'un conducteur appuie, avec son pied, sur une pédale de frein d'un véhicule, une tige de commande reliée à cette pédale de frein déplace au moins un piston du maître cylindre du circuit hydraulique de freinage. Le piston comprime alors un volume de liquide hydraulique contenu dans un réservoir du maître cylindre. Il résulte de cette compression une pression de liquide hydraulique à la sortie du maître cylindre.

La pression hydraulique entraîne le déplacement du liquide hydraulique dans les différents conduits du circuit hydraulique de freinage. Cette pression hydraulique permet de freiner au moins une roue du véhicule. Ainsi le liquide hydraulique, par sa pression, peut comprimer des patins de frein contre des disques de frein fixés à un moyeu d'au moins une roue du véhicule.

A la fin d'un freinage, une partie du liquide hydraulique présent dans les conduits du circuit hydraulique de freinage retourne vers le maître cylindre. Ce retour du liquide hydraulique vers le maître cylindre s'effectue par relâchement de la pression dans le maître cylindre, et du fait des différents efforts de rappel exercés sur les éléments du circuit. Pour le reste, le liquide stagne dans les conduits du circuit hydraulique de freinage.

Pour assurer le gavage rapide du circuit hydraulique tout en tenant compte de l'absorption, l'invention prévoit un circuit muni d'une vessie située en amont et préférentiellement proche de la pompe hydraulique. Cette vessie fonctionne au tout début de la phase de freinage, lors des tous premiers millimètres de course et consiste à gaver les conduits du circuit hydraulique de freinage par du liquide hydraulique, au tout début de la phase de freinage, de façon à réduire la phase d'absorption.

L'invention consiste donc en un circuit hydraulique de freinage d'un véhicule comportant:
- un maître-cylindre
- une pompe hydraulique
- des moyens pour injecter un volume supplémentaire
caractérisés en ce que lesdits moyens comportent une vessie comprenant à sa périphérie une tresse métallique, poreuse à l'air et retenant une membrane pour injecter un volume supplémentaire de liquide hydraulique par aspiration par la pompe hydraulique, cette aspiration déformant une membrane de la vessie sous un effet de dépression.

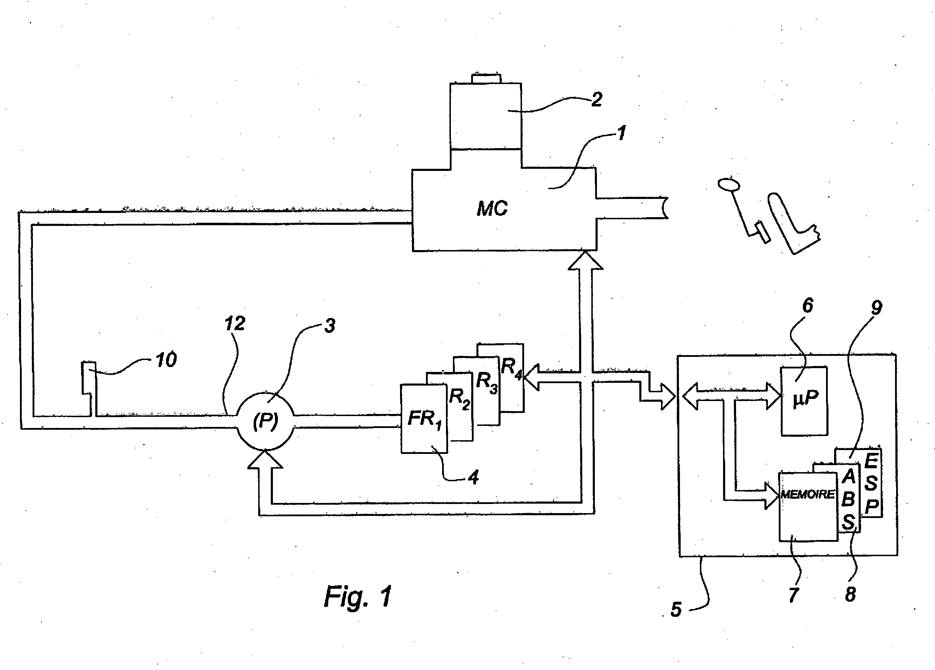

L'invention sera mieux comprise à la lecture de la description qui suit et à l'examen des figures qui l'accompagnent. Celles-ci ne sont présentées qu'à titre indicatif et nullement limitatif de l'invention. La figure 1 montre :
- Figure 1 : une représentation schématique d'un circuit hydraulique de freinage de l'invention muni d'une vessie.
- Figure 2 : une représentation d'un véhicule sur une trajectoire.
- Figure 3 et 4 : une vessie du circuit de l'invention selon deux positions de montage.
- Figure 5,6 et 7 : vues en coupe de la vessie du circuit de l'invention respectivement au repos, en action et au maximum de son action.

Sur la figure 1 est représentée schématiquement le circuit hydraulique de freinage de l'invention. Consécutif à la commande de pédale de frein se trouve le maître cylindre 1 équipé de son réservoir de liquide hydraulique 2. En aval du maître cylindre 1 sur le circuit hydraulique se trouve le groupe hydraulique équipé de sa pompe hydraulique 3. En aval de cette même pompe hydraulique 3 se trouvent les quatre freins 4 correspondants au quatre roues du véhicule. Partie intégrante du circuit hydraulique, un boîtier électronique 5 disposant d'un software et comprenant un micro processeur 6, une carte mémoire 7 ainsi que les systèmes respectivement antiblocage de frein 8 (ABS) et contrôle de trajectoire 9 (ESP).

Ce boîtier électronique 5 est en relation à la fois avec le maître cylindre 1, la pompe hydraulique 3 mais aussi et surtout avec les capteurs se trouvant sur chacun des freins de roues du véhicule. Un software intégré au boîtier hydraulique permet donc pour l'ABS ainsi que pour l'ESP de gérer le comportement du véhicule lors d'une trajectoire et lors d'un freinage en fonction des données récoltées sur les capteurs de roues.

Le long de ce circuit hydraulique une vessie de gavage 10 est positionnée sur le circuit hydraulique entre le maître cylindre 1 et la pompe hydraulique 3.

Dans le cadre d'un freinage normal avec un véhicule le long d'une route classique la quantité de liquide hydraulique présent dans le circuit et présent dans le réservoir de liquide de frein permet d'assurer une aspiration correcte de la pompe hydraulique du liquide en direction des freins.

Le boîtier électronique 5, quant à lui, permet dans ce cas de gérer correctement le bon dosage du freinage avec une performance optimale sans donc qu'il y ait de blocage de roue et en respectant la trajectoire voulue du véhicule.

Dans ce cas toutes les roues conservent une bonne adhérence et il est possible de gérer le freinage et la trajectoire du véhicule en fonction d'un freinage un peu plus long voire, d'un défreinage.

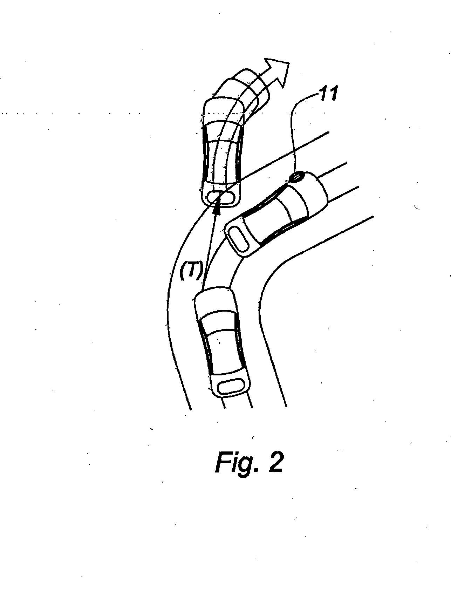

Figure 2, dans le contexte de l'invention le conducteur freine de façon brusque au moment d'une courbe soudaine et ou donne un coup de volant dans une courbe appuyée ce, avec un véhicule possédant la particularité de posséder un centre de gravité haut placé.

Selon un fonctionnement normal du véhicule, cette situation impose en une fraction de seconde une réaction immédiate du boîtier électronique 5 comportant la gestion du système de trajectoire 9 (ESP) et du système antiblocage de frein 8 (ABS). Mais pour certains types de véhicules les assistances de trajectoire et ou de freinage s'avèrent trop brutales. En effet sur un type de véhicule haut perché les transferts de masse sont importants et la tendance est très forte pour ce type de véhicule de se retourner. Pour éviter ce retournement on cherche à provoquer un sous-virage c'est-à-dire d'ouvrir la trajectoire du virage et de prendre donc une tangente (T) dans ce virage.

Du fait d'un appui très important de la roue avant 11 extérieure au virage, cette roue sert de point de pivot au véhicule en levant le véhicule sur ses roues intérieures au virage et en provoquant un début de retournement voire un retournement.

Un retournement du véhicule peut être évité grâce au circuit hydraulique de l'invention. Quand on détecte une possibilité de retournement, on commande à la pompe hydraulique 3 une aspiration supérieure impliquant un gavage du frein correspondant à cette roue pivot 11.

Le gavage obligé de la roue avant 11 extérieure au virage implique un blocage de cette roue qui glisse alors sur la chaussée et provoque un sous-virage maîtrisé du véhicule comme montré sur sa position grisée.

Ainsi le véhicule évite le retournement et les autres roues du véhicule retrouve une adhérence permettant de gérer à nouveau de façon normale la bonne tenue de la trajectoire et le respect de la performance du freinage.

Il est bien entendu que ce gavage ainsi que ce glissement de la roue 11 du véhicule se font en une fraction de seconde et ne mettent pas en cause une traversée de la chaussée voire une sortie de route du véhicule.

L'ordre donné par le boîtier électronique 5 à la pompe hydraulique 3 d'aspirer une quantité de liquide de frein suffisante au gavage de la roue concernée se faisant de façon très rapide, il est dès lors nécessaire de posséder un volume suffisant de liquide hydraulique dans le circuit.

Hors pour ces gros véhicules la quantité de liquide hydraulique présent dans le circuit et le temps nécessaire pour récupérer le volume nécessaire à partir du réservoir de liquide hydraulique sont respectivement trop petite ou trop long.

Il est en effet nécessaire de fournir un volume suffisant avec une pression suffisante à l'entrée de la pompe hydraulique 3 d'aspiration.

La vessie de gavage 10 répond à cette demande. Pour cela on la placera préférentiellement, sur le circuit hydraulique, proche de l'entrée 12 de la pompe hydraulique 3.
On peut remplacer la vessie par une bonbonne remplissable avec un fond déplaçable ou une bonbonne avec des bords à soufflets.

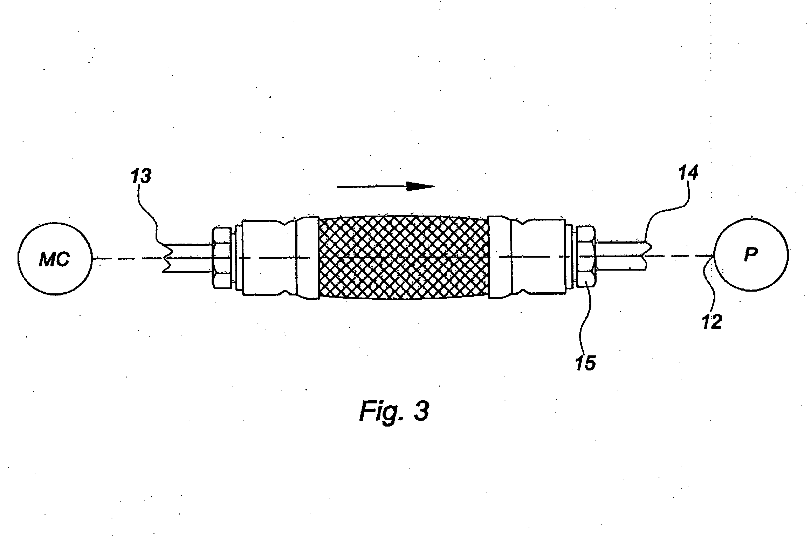

Sur la figure 3 est représenté une vessie de gavage 10 du circuit de l'invention. Dans ce cas, elle est montée en série sur le circuit hydraulique présentant une entrée 13 de circuit hydraulique en aval du maître cylindre ainsi qu'une sortie 14 de liquide hydraulique en amont de la pompe hydraulique 3. Ce type de montage présente donc pour la vessie deux extrémités avec un flux entrant et un flux sortant.

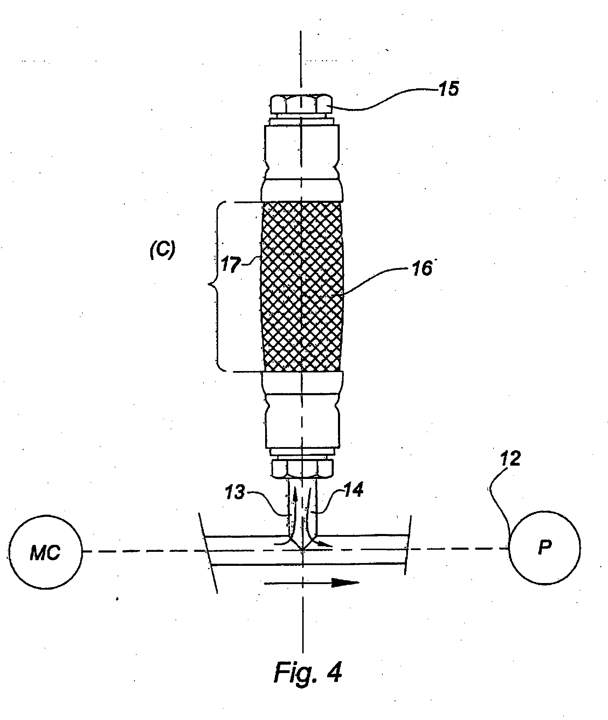

Sur la figure 4 est présenté un type de montage avec une vessie en branchement en parallèle. Elle forme ainsi un T avec le circuit hydraulique entre l'amont du maître cylindre et l'aval de la pompe hydraulique. L'extrémité de la vessie sur ce T fait office ainsi d'entrée 13 et de sortie 14 du liquide hydraulique.

Sur la figure 3 et la figure 4 les vessies correspondantes présentent chacune d'elles une purge 15 permettant de dégager l'air présent éventuellement au sein même de la vessie.

Ce ou ces types de montages série et parallèle se font sur un ou des tronçons libres du circuit de l'invention. En effet selon la quantité de liquide hydraulique nécessaire au gavage d'un ou plusieurs freins du véhicule, on pourra placer une ou plusieurs vessies de gavage sur des tronçons dédiés au montage de ces vessies le long du circuit hydraulique.

Sur la figure 4, le corps principal (C) de la vessie comporte une tresse métallique 16. Cette tresse métallique 16 est poreuse à l'air et comporte un maillage suffisamment fin pour éviter toute extrusion éventuelle d'une membrane 17 se trouvant à l'intérieur. La membrane 17 est à base de caoutchouc. La tresse métallique 16 comporte des bords convexes permettant à la membrane 17 se trouvant à l'intérieur d'épouser une forme de poire symétrique oblongue. Grâce à la pression de l'air passant au travers de la tresse métallique 16, la membrane 17 élastique retient et contient le liquide de freinage à la pression atmosphérique.

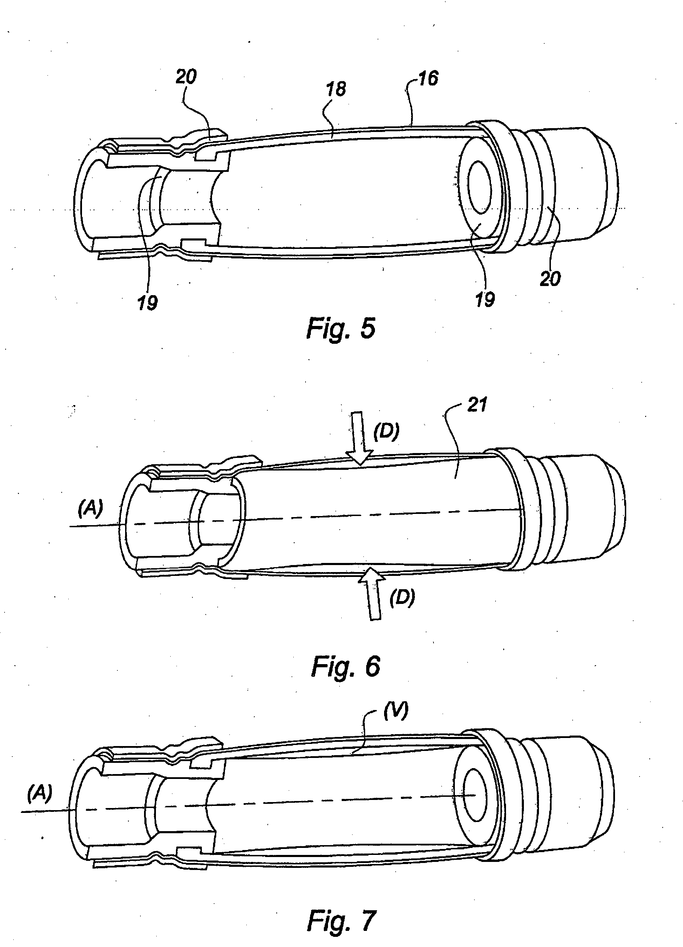

Sur la figure 5, on distingue en coupe l'épaisseur de la tresse métallique 16 ainsi que la membrane de caoutchouc 17 déformable constituant le contenant du liquide de freinage. Deux embouts hydrauliques 19 sont nécessaires à la fixation d'une vessie 10 sur le circuit hydraulique.

Deux bagues de sertissage 20 sont nécessaire afin de bien retenir la vessie 10 sur le circuit hydraulique. On peut constater que les montages tels que défini au figures 3 et 4 sont aisément réalisable sur le circuit hydraulique. La membrane 17, engagée dans la tresse 16 est montée à une extrémité autour d'un embout 19 qui la pénètre.

La bague 20 de sertissage entoure cette extrémité et la contraint, la sertit sur l'embout 19. On assure ainsi l'étanchéité du montage. L'embout 19 comporte par ailleurs, à une partie extérieure à la vessie, un filetage ou un clip en palier adaptable à un tronçon du circuit hydraulique prévu à cet effet.

Il suffira dans le cadre d'un montage en série de sectionner un tronçon de circuit hydraulique puis d'enfiler la vessie 10 et de sertir chaque extrémités. Dans le cas d'un montage en branchement parallèle, le T étant également préalablement prévu, il suffit d'ouvrir cette partie et de sertir la vessie sur une seule extrémité.

Sur la figure 6, lors d'une action de gavage du frein, la membrane de caoutchouc 17 de la vessie 10 se déforme. Les parois 18 de la membrane 17 sont convexes et épousent au repos la forme des bords intérieurs de la tresse métallique 16 définissant ainsi une position initiale. Puis, durant l'action de gavage, les parois 18 se creusent par aspiration de la pompe hydraulique 3. Cette aspiration déforme, par un effet de dépression dans le circuit du à une soudaine et forte demande en liquide hydraulique, les parois 18 de la membrane 17 en direction (D) de l'axe intérieur (A) du corps de la vessie 10. Entre les deux positions successivement au repos puis en dépression des parois 18 de la membrane 17, un volume (V) de liquide de freinage de la vessie 10 est aspiré dans le circuit.

Sur la figure 7, la limite de volume (V) maximum disponible par la vessie de gavage est atteinte. Les parois 18 de la membrane élastique 17 de la vessie se sont déformés au maximum de leurs possibilités.

On peut donc définir ainsi le volume maximum (Vmax) disponible de la vessie de gavage séparant le bord au moment de sa position repos de sa position maximum en gavage. C'est ce volume maximum (Vmax) disponible présent entre les positions convexes et concaves des parois 18 de la membrane 17 qui définit le nombre de vessies 10 nécessaires ou bien encore la taille de la vessie nécessaire au bon fonctionnement du système de gavage du circuit.

Afin que la membrane 17 puisse prendre successivement une position convexe ou concave le long d'une ligne droite reliant chacune des extrémités des deux embouts hydraulique, il est nécessaire que la vessie 10 possède une forme allongée et cylindrique circulaire. Cette forme sera donnée selon une proportion telle que la longueur de l'enveloppe 21 formée par la membrane 17 soit au moins deux fois supérieure à la dimension de son diamètre.

## Revendications

1. Circuit hydraulique de freinage d'un véhicule comportant:
- un maître-cylindre (1)
- une pompe hydraulique (3)
- des moyens pour injecter un volume supplémentaire
**caractérisés en ce que** lesdits moyens comportent une vessie (10) comprenant à sa périphérie une tresse métallique (16), poreuse à l'air et retenant une membrane (17) pour injecter un volume supplémentaire de liquide hydraulique par aspiration par la pompe hydraulique (3), cette aspiration déformant une membrane (17) de la vessie (10) sous un effet de dépression.

2. Circuit selon la revendication 1, **caractérisé en ce que** la vessie (10) se situe en aval du maître cylindre (1) et en amont de la pompe hydraulique (3).

3. Circuit selon la revendications 2, **caractérisé en ce que** la vessie (10) est montée avec une entrée (13) de liquide hydraulique à l'une de ses deux extrémités et une sortie (14) de liquide hydraulique à son autre extrémité, cette extrémité étant reliée en série au circuit.

4. Circuit selon l'une des revendications 1 à 3, **caractérisé en ce que** la vessie est montée avec une seule extrémité faisant office d'entrée et de sortie du liquide hydraulique, cette extrémité étant reliée en branchement en parallèle au circuit.

5. Circuit selon l'une des revendications 1 à 4, **caractérisé en ce qu'**il comporte plusieurs vessies.

6. Circuit selon l'une des revendications 1 à 5, **caractérisé en ce qu'**il comporte un ou plusieurs tronçons libres afin de recevoir une ou plusieurs vessies quel que soient leurs types de montage.

7. Circuit selon l'une des revendications 1 à 6, **caractérisé en ce que** la vessie comporte une membrane (17) de caoutchouc déformable.

8. Circuit selon l'une des revendications 1 à 7, **caractérisé en ce que** la vessie comporte une purge d'air (15).

9. Circuit selon l'une des revendications 1 à 8, **caractérisé en ce que** la vessie se présente sous une forme allongée et cylindrique circulaire avec une longueur deux fois supérieure à la dimension de son diamètre.

## Patentansprüche

1. Hydraulischer Bremskreis eines Fahrzeugs, der Folgendes umfasst:
- einen Hauptzylinder (1)
- eine Hydraulikpumpe (3)
- Mittel zum Einspritzen eines Zusatzvolumens **dadurch gekennzeichnet, dass** die Mittel eine Blase (10) umfassen, die an ihrem Umfang ein metallisches Geflecht (16) aufweist, das luftdurchlässig ist und eine Membran (17) zum Einspritzen eines Zusatzvolumens von Hydraulikflüssigkeit durch Ansaugen durch die Hydraulikpumpe (3) hält, wobei das Ansaugen eine Membran (17) der Blase (10) durch eine Unterdruckwirkung verformt.

2. Kreis nach Anspruch 1, **dadurch gekennzeichnet, dass** sich die Blase (10) stromabwärts des Hauptzylinders (1) und stromaufwärts der Hydraulikpumpe (3) befindet.

3. Kreis nach Anspruch 2, **dadurch gekennzeichnet, dass** die Blase (10) mit einem Einlass (13) für Hydraulikflüssigkeit an einem ihrer beiden Enden und einem Auslass (14) für Hydraulikflüssigkeit an ihrem anderen Ende befestigt ist, wobei dieses Ende mit dem Kreis in Reihe verbunden ist.

4. Kreis nach einem der Ansprüche 1-3, **dadurch gekennzeichnet, dass** die Blase mit einem einzigen Ende befestigt ist, das als Einlass und Auslass für die Hydraulikflüssigkeit dient, wobei dieses Ende als Verzweigung mit dem Kreis parallel verbunden ist.

5. Kreis nach einem der Ansprüche 1-4, **dadurch gekennzeichnet, dass** er mehrere Blasen umfasst.

6. Kreis nach einem der Ansprüche 1-5, **dadurch gekennzeichnet, dass** er einen oder mehrere freie Abschnitte zur Aufnahme einer oder mehrerer Blasen unabhängig von ihrer Befestigungsart umfasst.

7. Kreis nach einem der Ansprüche 1-6, **dadurch gekennzeichnet, dass** die Blase eine Membran (17) aus verformbarem Kautschuk umfasst.

8. Kreis nach einem der Ansprüche 1-7, **dadurch gekennzeichnet, dass** die Blase eine Entlüftung (15) umfasst.

9. Kreis nach einem der Ansprüche 1-8, **dadurch gekennzeichnet, dass** die Blase eine längliche und kreiszylindrische Form mit einer Länge, die zweimal so groß wie die Abmessung ihres Durchmessers ist, aufweist.

## Claims

1. Hydraulic braking circuit for a vehicle comprising:
- a master cylinder (1)
- a hydraulic pump (3)
- means for injecting an additional volume **characterized in that** said means comprise a bladder (10) comprising, at its periphery, a metallic braid (16), porous to air and retaining a membrane (17) for injecting an additional volume of hydraulic liquid through suction by the hydraulic pump (3), this suction deforming a membrane (17) of the bladder (10) under a depression effect.

2. Circuit according to Claim 1, **characterized in that** the bladder (10) is situated downstream of the master cylinder (1) and upstream of the hydraulic pump (3).

3. Circuit according to Claim 2, **characterized in that** the bladder (10) is mounted with a hydraulic liquid inlet (13) at one of its two ends and a hydraulic liquid outlet (14) at its other end, this end being linked in series to the circuit.

4. Circuit according to one of Claims 1 to 3, **characterized in that** the bladder is mounted with a single end serving as hydraulic liquid inlet and outlet, this end being linked as a parallel connection to the circuit.

5. Circuit according to one of Claims 1 to 4, **characterized in that** it comprises a number of bladders.

6. Circuit according to one of Claims 1 to 5, **characterized in that** it comprises one or more free sections in order to receive one or more bladders regardless of their mounting types.

7. Circuit according to one of Claims 1 to 6, **characterized in that** the bladder comprises a membrane (17) of deformable rubber.

8. Circuit according to one of Claims 1 to 7, **characterized in that** the bladder comprises an air bleed (15).

9. Circuit according to one of Claims 1 to 8, **characterized in that** the bladder is of elongate circular cylindrical form with a length twice that of its diameter dimension.
